Europäisches Patentamt

European Patent Office

Office européen des brevets

(11) Publication number: **0 291 674**
**B1**

(12) EUROPEAN PATENT SPECIFICATION

(45) Date of publication of patent specification: **06.02.91**

(21) Application number: **88105307.8**

(22) Date of filing: **08.07.86**

(60) Publication number of the earlier application in accordance with Art. 76 EPC: **0 209 064**

(51) Int. Cl.⁵: **B 08 B 9/20, A 23 L 3/04, B 65 G 17/32, B 65 G 15/14**

(54) An apparatus for handling containers.

(30) Priority: **19.07.85 JP 159962/85**
**19.07.85 JP 159961/85**
**31.10.85 JP 244790/85**

(43) Date of publication of application:
**23.11.88 Bulletin 88/47**

(45) Publication of the grant of the patent:
**06.02.91 Bulletin 91/06**

(84) Designated Contracting States:
**DE FR GB IT NL**

(56) References cited:
**BE-A- 639 825**
**CH-A- 405 095**
**DE-C- 524 003**
**FR-A-2 386 460**
**GB-A- 988 993**
**US-A-1 724 336**

(73) Proprietor: **MITSUBISHI JUKOGYO KABUSHIKI KAISHA**
**5-1, Marunouchi 2-chome Chiyoda-ku**
**Tokyo 100 (JP)**

(72) Inventor: **Araki, Kazunori Nagoya Machinery Works Mitsubishi**
**Jukogyo K.K. 1, Aza Takamichi Iwatsuka-cho**
**Nakamura-ku Nagoya-shi Aichi-ken (JP)**
Inventor: **Hayashi, Masayuki Nagoya Machinery Wks. Mitsubishi**
**Jukogyo K.K. 1, Aza Takamichi Iwatsuka-cho**
**Nakamura-ku Nagoya-shi Aichi-ken (JP)**
Inventor: **Yamaguchi, Shogo Nagoya Machinery Wks. Mitsubishi**
**Jukogyo K.K. 1, Aza Takamichi Iwatsuka-cho**
**Nakamura-ku Nagoya-shi Aichi-ken (JP)**
Inventor: **Hanada, Munehiro Nagoya Machinery Wks. Mitsubishi**
**Jukogyo K.K. 1, Aza Takamichi Iwatsuka-cho**
**Nakamura-ku Nagoya-shi Aichi-ken (JP)**

(74) Representative: **Henkel, Feiler, Hänzel & Partner**
**Möhlstrasse 37**
**D-8000 München 80 (DE)**

EP 0 291 674 B1

Courier Press, Leamington Spa, England.

## Description

The present invention relates to an apparatus for handling and heating, various sized containers comprising a carrier for transporting containers; and at least one container holder each of which is adapted to hold various sized containers one at a time, said at least one container holder being transported through at least one device selected from the group of devices consisting of means for casing, uncasing, cleaning, filling, capping, sealing and sterilizing containers held by said container holder.

Typically the apparatus can be used in a container-handling plant comprising handling apparatuses, such as filling machine, bottle-washing machine, rinser, case packer, uncaser, capper, and pasteurizer, and carrying apparatuses, such as conveyors. The apparatus can also be used for warming or cooling product containers in a bottle-cooling machine, bottle-warming machine, can-cooling machine, can-warming machine, in-bottle pasteurizer, in-can-pasteurizer, or the like and also in an equipment for warming or cooling product containers.

Background of the invention

A simple flexible container holder that is versatile, produces a sufficient gripping force, and has a self-centering function is described in the parent application, EP—A—0 209 064.

In a bottling or canning plant, many kinds of containers are handled, i.e. conveyed, indexed, positioned, held, and gripped. Whenever a different kind of container is to be handled, dedicated tools adapted to the size and shape of the handled containers are prepared, or the tools used for the previous handling are readjusted. As more diversified containers are used, a single plant is required to handle more kinds of containers. In order to satisfy this requirement, the components of a plant, i.e., rinser, filler, capper, caser, conveyor, etc. must be equipped with their respective numerous dedicated devices. Further, a long time is taken to set up the equipment.

In this way, in the conventional plant of this kind, dedicated handling devices are used for each individual kind of container. Therefore, the components of the plant need their respective many replaceable parts. Further, a long time is required to set up the components.

A conventional plant for handling containers consists of fillers, rinsers, cappers, case packers, uncasers, and other components which are connected together by conveyors in the order of operation. Containers to be handled are taken out of a bulk depalletizer. Then, they are individually cleaned, filled, and received in a packer. These containers are repeatedly combined together or separated according to the characacteristics and the conditions of the components. At the entrance to each component, the containers are spaced a given distance from one another or arrayed, depending on the characteristics and the conditions of the component. The conveyors which interconnect the components of the plant are controlled to smoothly and efficiently run the whole production line. When one kind of container is switched to another, the following operations have been required to be performed according to the shape and the size of the container. (1) Ajustment of the width and height of each conveyor guide. (2) Adjustment of the width and height of the guides for each component. (3) Replacement and adjustment of the parts of each components which handle containers. (4) Setting of the velocity, capacity, etc.

These operations are effected when the production line is stopped. In the conventional container-handling plant described above, the components of the plant are interconnected by the conveyors, and the containers are separately handled. Therefore, the following various problems have arisen.

(1) The containers are repeatedly gathered and separated according to the characteristics and conditions of the components of the plant. Whenever the containers are handled, they collide with each other or with guides or are rubbed. As a result, the containers, such as bottles, are caused to scuff or break, or become damaged.

(2) The collisions or rubbings described in (1) above produce noise, deteriorating the work environment.

(3) It is necessary to arrange the containers at certain intervals or array them at the entrance to each component. Hence, the rate of operation of the whole production line decreases, leading to a reduction in the productivity.

(4) When one kind of container is switched to another, the widths and heights of guides for the conveyors interconnecting the components are required to be readjusted according to the shape and dimensions of the container. Further, it is necessary to replace or readjust the guides for the components and the parts for handling the container. Therefore, it is quite laborious to make preparations for the switching of the kind of container. Also, large space and much labor are needed to store and convey various kinds of parts. The parts used to switch one kind of container to another include container-indexing screws, star wheels, container guides, valve attachments. As the number of the kinds of containers handled increases, the number of these parts increases, thus posing problems.

(5) The containers are gathered or separated while conveyed in one or more rows. During this operation, the containers may come to a stop or fall down, resulting in a decrease in the rate of operation of the production line. Also, in order to remove the trouble, labor is necessitated. Further, in order that the containers be smoothly gathered and separated and that the components run efficiently, the line is required to be controlled in a complex manner.

(6) Since the components each having a single function are connected together by conveyors to constitute a production line, the plant occupies large space. To save the energy consumed and the space, improvements have been demanded.

(7) When one kind of container is switched to another, it is necessary to stop or halt the production line. This lowers the rate of operation of the equipment, and makes it difficult to effect a production so as to meet the diversified consumer's needs.

Pasteurizers for sterilizing products have heretofore showered the outside of each container, the contents of which are warmed or cooled by the natural convection of the contents. Accordingly, it takes a long time to sterilize the containers. This prolongs the whole production time, which is required to be improved to reduce the energy consumed and the working hours. Also, the pasteurizers of a plant occupy the largest space to install among the components of the plant. This situation must be remedied to curtail the space.

As described above, when containers of this kind are handled, they have been treated individually. Therefore, numerous problems have occurred, e.g., damage to the containers, production of noise, a reduction in the rate of operation of the production line, cumbersome with which one kind of container is switched to another, an increase in the number of preparatory steps, the necessity of various parts, the need to control the line in a complicated way, and difficulty with which the production is effected timely. Especially, a sterilizing process needs a very long time. Further, the equipment occupies large space. Among others, these undesirable situations must be remedied.

The conventional method of warming or cooling product containers, such as bottles and cans, is to spray warm or coled water on the outside of each product container while the container is put upright, so that the liquid inside the container is warmed or cooled by the natural convection of the liquid. When this conventional method is utilized, the warming or cooling depends on the natural convection of the liquid inside the product container, such as a bottle or can, and so it takes a very long time to complete the warming or cooling operation.

When a bottle or can placed still is warmed or cooled by natural convection without stirring the inside product liquid, locally and considerably heated or cooled spots are generally produced before the handling process. Especially, when the whole inside liquid is sterilized, it is necessary to uniformly heat the whole liquid. For this purpose, if local cold spots are heated to a predetermined temperature, then the other portions are overheated. This may impair the quality of the product, such as taste, color, flavor, aroma or the like.

In this way, the conventional method of warming or cooling a product container, such as a bottle or can, is to spray warm or cold water on the outside of the container that is placed still. The resulting natural convection of the inside product liquid warms or cools the liquid. Therefore, it takes a long time to complete the warming or cooling operation. Further, locally heated or cooled spots tend to occur inside the liquid, thus sometimes degrading the quality of the product.

Summary of the invention

An apparatus as initially described is known from BE—A—639 825. This document describes an arrangement in a bottle washing machine wherein a plurality of tube shaped bottle holders are lined up and connected together by means of rods or the like to form transporting units. Both ends of these transporting units are each connected through a flange member and additional connecting elements to an endless conveyor chain or the like. So, in this known arrangement, the container holders are connected to each other and to the conveyor by a plurality of fastening elements and are not detachably independently.

In US—A—1 724 336, a bottle holder for use in a bottle washing machine is described comprising a body for being moved for carrying the bottle to be operated upon and a moving member mounted for sliding on said body and provided with a cup for receiving the next portion of the bottle. Also in this known arrangement, a plurality of bottle holders are lined up across the conveying direction, and there is no provision for detachably holding and conveying single container holders adapted to hold various sized containers one at a time.

In DE—C—524 003, a bottle treatment machine is described wherein various sized bottles are conveyed in an endless conveying device. Also in this known arrangement, the bottle holders are not provided for holding various sized containers one at a time and the bottle holders are not held detachably.

It is an object of the invention to provide an improved apparatus for handling and treating one or more containers simultaneously using a single carrier that can be employed for various handling processes. According to the invention, an apparatus as initially described is characterized in that said carrier comprises a pair of side plates in spaced opposed relation, at least one groove is provided in each of said pair of side plates, each of said at least one groove of said one side plate being opposed to the other of said at least one groove in the other said side plate, thereby comprising a pair of grooves, and said at least one container holder is detachably held by said side plates being slidably received in said pair of grooves.

Some advantageous further developments of the invention are defined in the subclaims. For example, in one embodiment of the invention, containers, such as bottles and cans, are repeatedly turned upside down while they are received in a carrier. Thus the product liquid inside each container is well stirred. This makes the temperature distribution within the container more homogeneous. Further, the general transfer of heat is almost doubled during the warming or cooling operation. When an in-bottle-pasteurizer is used also as a machine for cooling or warming bottles, or when an in-can-pasteurizer is employed also as a machine for cooling or warming cans, the carrier is allowed to travel a shorter distance in its path to select a shorter course, whereby the time required for the handlings can be shortened.

Other objects and features of the invention will appear in the course of the description thereof which follows.

Brief description of the drawings

Fig. 1 is a plan view of a carrier which receives a flexible container holder shown in EP—A—0209064 and carries some containers as a unit;

Fig. 2 is a cross-sectional view taken on line III—III of Fig. 1;

Fig. 3 is a cross-sectional view taken on line IV—IV of Fig. 1;

Fig. 4 is a view similar to Fig. 3, but in which a small container is retained;

Fig. 5 is a view similar to Fig. 3;

Fig. 6 is a view similar to Fig. 5, but in which a large container is retained;

Fig. 7 is a schematic process flow diagram of a bottling system using a flexible container holder;

Fig. 8 is a plan view of the bottling system shown in Fig. 7;

Fig. 9 is a perspective view of a carrier in which containers are received and held;

Fig. 10 (I)—(V) are side elevations of one of the containers shown in Fig. 9, for showing the manner in which it is rotated;

Fig. 11 is a schematic side elevation in cross section of an equipment for warming or cooling containers, such as bottles or cans;

Fig. 12 is a side elevation in cross section of two carriers which are rotated together;

Detailed description of the invention

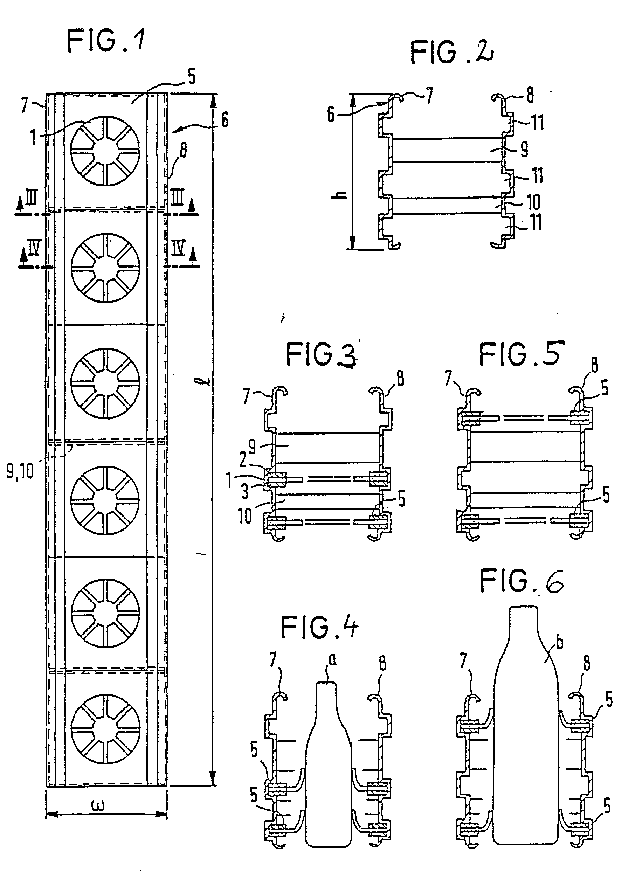

Referring next to Figs. 1 and 2, there is shown a carrier 6 in which a container holder 5 and other similar holders, indicated also by numeral 5, are mounted. In the illustrated example, six holders 5 are mounted in the carrier 6 having a desired length. The carrier 6 has side plates 7 and 8 between which plates 9 and 10 extend. The plates 9 and 10 are fastened to the side plates 7 and 8 by welding or other method to constitute a unitary structure. Each of the side plates 7 and 8 is provided with grooves 11 running longitudinally at different heights. In the illustrated example, three grooves 11 are formed in each side plate at different heights. Some holders 5 can be received in each groove 11 horizontally so as to be withdrawable. The number of the holders 5 can be determined at will according to the kind of the container employed. When a different kind of container is used, the holders 5 are replaced by holders of a different kind. At this time, it is not necessary to modify the dimensions l, w, h of the carrier 6.

Before each container a is handled, it is held and placed in the center with certainty by an upper holder 5a and a lower holder 5b, as shown in Fig. 3.

In order to accommodate larger and heavier containers, an additional holder 5 can be received in the highest groove 11 in the carrier 6 as shown in Figs. 5 and 6.

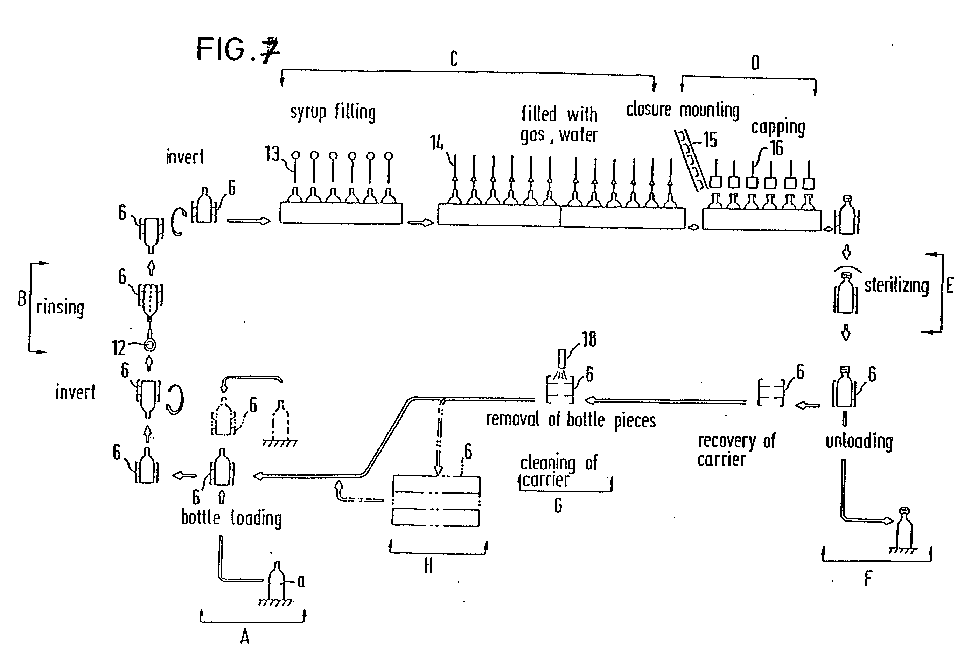

Referring to Fig. 7, there is shown a bottling system making use of the holders 5 described above.

(1) During a bottle-loading process, containers are inserted into the holders 5 which are mounted in the carrier 6, and then the holders 5 are turned upside down by an inverting mechanism (not shown).

(2) During a rinsing process, water is jetted out of a cleaning nozzle 12 to clean the inside and outside of each container. Subsequently, the carrier 6 is again turned inside down by an inverting mechanism (not shown), and is conveyed for undergoing the subsequent syrup-filling process.

(3) Syrup is supplied into the containers from filling nozzles (13. Then, water in which gaseous carbonic acid may or may not be introduced is supplied into the containers from filling nozzles 14. The syrup and the water can be supplied simultaneously, or they can be supplied after they are mixed. Then, the carrier is transported for the subsequent capping process.

(4) Caps 15 are put on the mouths of the containers, and then wound and tightened by capping head 16. Thereafter, the carrier is moved for undergoing the subsequent sterilizing process.

(5) During the sterilizing process, the liquid sealed in each container is sterilized together with the container. This process corresponds to the processes performed by the pasteurizer, bottle-warming machine, and bottle-cooling machine of the conventional system. In the present process, the whole carrier 6 is rocked or rotated to improve the efficiency of heat transfer.

(6) During an unloading process, the sterilized containers are taken out of the carrier 6 by a means (not shown). Then, the containers are carried for undergoing a casing process (not shown). The carrier 6 is conveyed to a station where pieces of broken bottles are removed. The carrier 6 is then transported to another station where it is cleaned.

(7) If any container breaks in the preceding process, the pieces of the bottle remaining in the carrier 6 are removed by cleaning the whole carrier 6 with a high-pressure jet water produced from a cleaning nozzle 18.

Carriers in which holders of different kinds are mounted are previously prepared to cope with changes in the sequence in which various kinds of containers are handled. This preparation is herein referred to as the setup of the first stage, and can be automated.

As indicated by the phantom line in Fig. 7, the container may be inserted into the holder from above during the bottle-loading process. In this case, the vertical positional relation between the holding frame and the adapter is the reverse of the relation shown in Fig. 2. Further, it is possible to insert the container into the holder from below for the loading process and to withdraw the container upwardly for the unloading process, and vice versa.

The carrier designed as described above yields the following advantages.

(1) Since several containers are carried simultaneously by a carrier, a conveyor which would heretofore been needed simply to convey containers can be dispensed with. Hence, the equipment can be made compact. Also, the equipment occupies much less space than conventional.

(2) Since the outside diameter of the carriers is fixed, when one kind of container holder is switched to another, readjustment, a trial run of the production line, and so forth are unnecessary before the operation of the production line is started.

(3) Since the setup of the first stage can be automated, as soon as the containers are withdrawn from the carrier, the next group of different containers can be mounted in the carrier.

(4) No adjustments are required in handling containers. When the containers are bottles, they do not fall down, nor does any other trouble take place. Therefore, the production line can run quite stably all day in the unattended condition.

(5) Since the equipment for handling the containers is simple, the whole equipment can be rendered germfree. This facilitates various manufacturings of products, including germfree filling.

(6) The time taken to sterilize the containers can be greatly shortened.

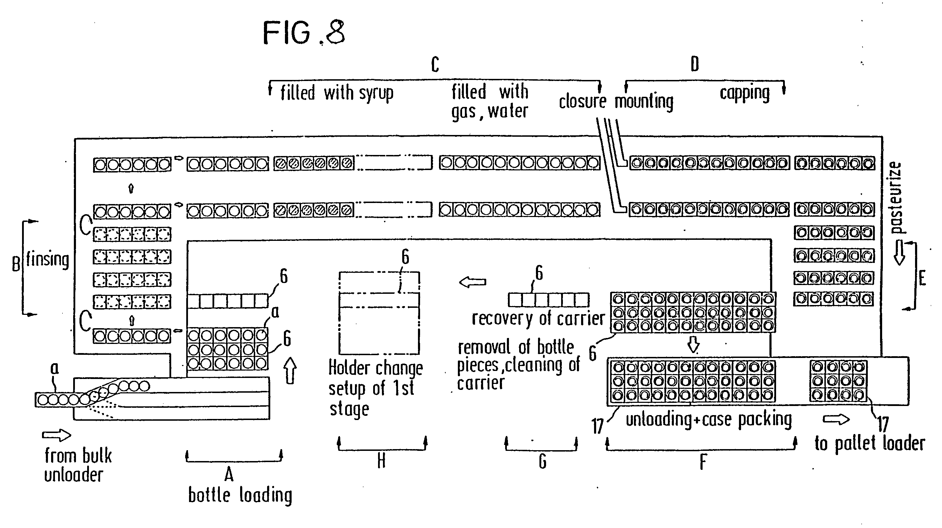

The manner in which each container $a$ is handled using the holder 5 and the carrier 6 designed as described above is now described by referring to Figs. 7 and 8. A process for loading the containers $a$ into the carrier 6 is indicated by A. Specifically, a certain number, six in the present example, of containers $a$ are loaded into the holder 5 and placed in position with either a known mechanism (not shown) that grasps bottles or a manipulator (not shown), the holder 5 being mounted in the carrier 6.

After the containers are received in the holder 5 that is mounted in the carrier 6, the carrier is moved, together with the holder, into the next station where a cleaning process B is carried out. During this process B, the carrier 6 is inverted by an inverting mechanism (not shown). Detergent or cold or warm water is ejected toward the inverted containers from cleaning nozzles 12 to wash the inside and outside of each container. After the containers $a$ received in the carrier 6 undergo the cleaning process B, the carrier 6 is again inverted and conveyed to the next station where a filling process C is carried out, while the mouth of each container $a$ is located at the top.

The filling process C is effected to fill each container $a$ received in the carrier 6 with liquid. This station has a filling mechanism (not shown) including filling nozzles 13 and 14. In the present example, syrup and water in which gaseous carbonic acid may or may not be introduced are injected one after another into each container, but it is also possible to inject both simultaneously.

During a capping process D, a cap 15 is put on the mouth of each container and then is rotated and tightened by a capping head 16. In the illustrated example, the cap is a screw cap or roll-on cap. Where the cap is a crown cap, each container can also be handled similarly.

After the capping process is finished, the carrier 6 goes into a sterilizing process E, where the liquid sealed in the containers is sterilized together with the containers. Note that this process has been conventionally carried out by a pasteurizer, bottle-warming machine, or bottle-cooling machine. A mechanism (not shown) for rocking or rotating the whole carrier 6 is provided. The present process is not restricted to sterilization, but rather it can also be used to warm or cool bottles or cans.

During the next unloading/case packing process F, each container $a$ received in the carrier 6 is taken out of it, and a certain number, twelve in this example, of containers $a$ are packed into a case 17. The containers $a$ are separated from the carrier 6, which is conveyed to the next station where a bottle piece-removing/carrier cleaning process G is carried out.

In the process G, if any bottle breaks during the preceding process, the whole carrier 6 is cleaned with high-pressure jet water ejected from a cleaning nozzle 18 to remove the pieces of the broken bottle.

After the completion of the cleaning of the carrier 6, it is returned to the initial process, or the loading process. If the next set of containers differs in shape or dimensions from the previous set of containers, all the carriers or holders 6 are replaced with ones which are prepared during a holder type change/first stage setup process H.

During the processes A through H, the carrier 6 is carried in a closed loop and repeatedly used. Depending on the kind or quality of product, the sterilizing process F may not be needed, in which case the carrier 6 can be caused to bypass the station in which the sterilizing process is carried out.

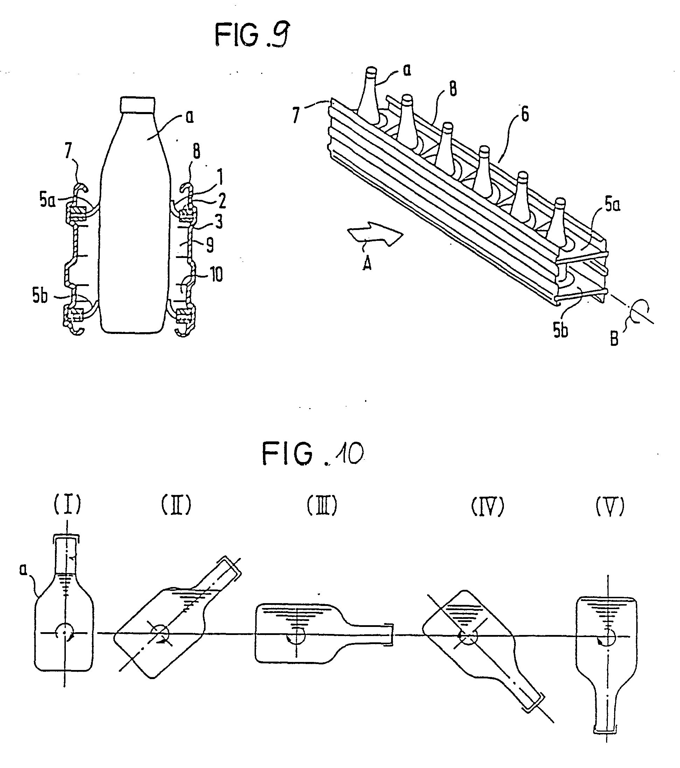

Fig. 9 is a perspective view of the aforementioned carrier 6 in which several, six in the present example, containers $a$ are held by upper holders 5a and lower holders 5b. The carrier 6 is conveyed in the direction indicated by the arrow A while rotated as indicated by the arrow B. The carrier can be rotated either clockwise or counterclockwise as shown.

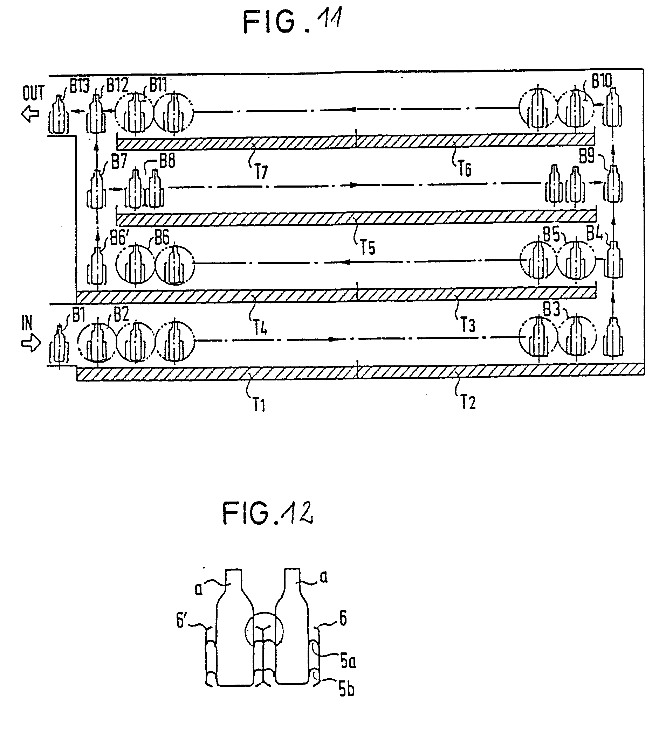

Fig. 10 shows the manner in which the container $a$, such as a bottle or can, is rotated. It is rotated from an upright position (I) through angular positions (II), (III), (IV) to an inverted position (V). To return the container from the inverted position (V) to the original position (I), the reverse sequence is taken or the container in the inverted position (V) is kept rotating in the same direction.

Containers $a$ are warmed or cooled using the aforementioned holders 5 and carrier 6 in the manner described below. Fig. 11 shows an equipment for warming or cooling the containers $a$. The equipment is housed in a housing, and has handling vessels $T_1$–$T_7$ which are disposed at different heights for each individual handling. Conveyance paths extend between the vessels to allow carriers 6 to move into the vessels of the desired height. The paths are designed so that the paths of different heights communicate with each other through vertical passages at the ends of the vessels. When each carrier 6 is moved, it enters a stage $B_1$, passes through stages $B_2$—$B_{12}$, and goes out of a stage $B_{13}$. The circles indicated by the phantom lines indicate that the carrier 6 is rotated by a driving device (not shown). The carrier 6 in which filled containers $a$ are held first enters the stage $B_1$. Then, the carrier is moved into successive locations by an appropriate means (not shown) as indicated by the arrow. Within the equipment, the carrier 6 is conveyed in the direction indicated by the arrow A in Fig. 14 by a conveyance means (not shown).

After the container $a$ holding product liquid of room temperature is heated for sterilization, it is cooled in the manner described below. In this case, the vessels $T_1$—$T_4$ act as heating vessels, each of which draws in a heating medium of a certain temperature using a pump or the like and sprays the medium against the carrier 6 that is travelling through the vessel. During this heating process, each container $a$ is rotated by the driving device when it is moved from the stage $B_2$ to the stage $B_3$ of the lowest height and also when it is moved from the stage $B_5$ to the stage $B_6$ of the next lowest height to improve the general transfer of heat and to homogeneously heat the inside product liquid.

A holding vessel $T_5$ which is located in the third place from the bottom serves to enhance the effects of heating and sterilization. The medium which is at a certain temperature and stores heat is drawn in by a pump or the like and sprayed against the carrier 6, or the containers $a$, that is travelling through the vessel $T_5$ between the stages $B_7$ and $B_9$. Since the containers have been already heated sufficiently uniformly in the heating vessels $T_1$—$T_4$, it is not necessary to rotate the carrier 6 in this holding vessel $T_5$.

Cooling vessels $T_6$ and $T_7$ use pumps or the like to draw in coolant of a certain temperature. Then, the coolant is sprayed against the carrier 6, or the containers $a$, that is travelling through the vessel $T_6$ or $T_7$ to cool the containers. Every carrier 6 is rotated also in this stage in order to enhance the general transfer of heat and to cool the containers uniformly. The containers can be cooled below a predetermined temperature until they reach the final stage $B_{13}$.

Where the equipment shown in Fig. 11 is used simply as a bottle-warming or -cooling machine or can-warming or -cooling machine for the containers $a$, the equipment can be so controlled that the carriers jump from the position of the stage $B_4$ to the position of the stage $B_9$ and then to the position of the stage $B_{10}$, or that they jump from the position of a stage $B_6'$ to the stage $B_7$ and then to the position of the stage $B_{12}$. In either case, the best route is selected, depending on the warming or cooling conditions or handling conditions. Thus, the time taken to handle the containers can be minimized.

It is possible to form an exit (not shown) at a desired location in the housing, for removing the carrier 6 at the position, for example, of the stage $B_6'$ from the equipment. In the equipment shown in Fig. 11, the vessels are disposed in a three-dimensional manner. If necessary, they can be disposed on a plane. The number and length of the vessels and the period during which the vessels are warmed or cooled are varied, depending on the kind of bottle or cans handled or other conditions.

In the equipment shown in Fig. 11, the carriers are individually turned. As shown in Fig. 12, two or more carriers 6, 6' are fastened together so that they may rotate as a unit. In this case, the space inside the equipment can be efficiently employed. Therefore, the equipment can be made compact. In the above examples, the carriers 6 can be supplied in two or more longitudinal rows.

Experiment has shown the following relations. Under the condition that the container is placed vertically and still (Fig. 15(I)), let the general heat transfer coefficient be $h_s$ [Kcal/m$^2$ · hr · °C].

(1) The container shown in Fig. 10 was placed upright (I) for 30 seconds. Then, it was placed in a horizontal posture (III) for 30 seconds. These conditions were repeated. The resulting general heat transfer coefficient $h_1$ [Kcal/m$^2$ · hr · °C] was given by the relationship

$$h_1/h_s = 1.10$$

That is, $h_1$ was 1.10 times as large as $h_s$.

(2) The two conditions (I and III) were alternately created at intervals of 15 seconds. The obtained general heat transfer coefficient $h_2$ [Kcal/m$^2$ · hr · °C] was given by

$$h_2/h_s = 1.35$$

That is, $h_2$ was 1.35 times as large as $h_s$.

(3) The condition (I) in which the container $a$ took an upright posture and the condition (V) in which it was inverted were alternately produced at intervals of 5 seconds. The obtained general heat transfer coefficient $h_3$ [Kcal/m$^2$ · hr · °C] was given by

$$h_3/h_s = 1.90$$

That is, $h_3$ was 1.90 times as large as $h_s$.

Thus, by rotating containers, such as bottles or cans, in this way, they can be warmed or cooled efficiently. Also, the temperature distribution inside each container can be rendered homogeneous.

When bottles or cans are rotated to enhance the heat transfer for improving the efficiency of warming or cooling, the following facts must be taken into account.

(1) If the rotational velocity is too large or small, undesirable result will be obtained. The effects of stirring of the product liquid inside a bottle or can which is caused by rotation depend on the space left above the inside liquid, the amount of the liquid, and the shape of the container.

(2) Generally, the degree of rotation depends on the shape of the bottle or can, but the maximum efficiency is obtained by repeatedly turning it upside down.

As described in detail, in one embodiment of the invention, containers such as bottles or cans are warmed or cooled while repeatedly turned upside down, so that the product liquid inside each container is stirred. As a result, the general heat transfer efficiency is approximately doubled, compared with the case where they are not rotated. Consequently, the containers can be handled in a time about half of the time heretofore required. Further, the temperature distribution of the liquid inside each container can be made homogeneous. In addition, the liquid is homogenized. Hence, good products can be obtained efficiently.

## Claims

1. An apparatus for handling and treating various sized containers comprising

a carrier (6) for transporting containers (a, b); and

at least one container holder (5) each of which is adapted to hold various sized containers (a, b) one at a time,

said at least one container holder (5) being transported through at least one device selected from the group of devices consisting of means for casing, uncasing, cleaning, filling, capping, sealing and sterilizing containers held by said container holder (5), characterized in that

said carrier (6) comprises a pair of side plates (7, 8) in spaced opposed relation,

at least one groove (11) is provided in each of said pair of side plates (7, 8), each of said at least one groove (11) of said one side plate (7) being opposed to the other of said at least one groove in the other said side plate (8), thereby comprising a pair of grooves; and

said at least one container holder (5) is detachably held by said side plates (7, 8) being slidably received in said pair of grooves (11).

2. The apparatus of claim 1, wherein there are at least three pairs of grooves (11) and at least two container holders (5), whereby shifting said container holders (5) to different ones of said pairs of grooves (11) accommodates various length containers.

3. The apparatus of claim 1 or 2, characterized in further comprising

means for repeatedly turning said carrier (6), whereby a container (a) held by said container holder (5) is repeatedly turned and

means for changing the temperature of the containers (a) as the containers are repeatedly turned by said turning means.

4. The apparatus of claim 3, wherein the means for changing temperature of the containers (a) comprises means for spraying fluid on the containers.

## Patentansprüche

1. Vorrichtung zur Handhabung und Behandlung von Behältern verschiedener Größe, umfassend

einen Träger (6) zum Transportieren der Behälter (a, b) und

mindestens einen Behälter (5) von denen jeder Behälter (a, b) verschiedener Größe jeweils einzeln zu halten vermag,

wobei der mindestens eine Behälterhalter (5) durch mindestens eine Einrichtung aus der Gruppe umfassend Einrichtungen zum Verpacken, Auspacken, Reinigen, Befüllen, Verschlußkappensetzen, Verschließen und Sterilisieren der vom Behälterhalter (5) gehaltenen Behälter transportiert wird, dadurch gekennzeichnet, daß

der Träger (6) zwei einander mit Abstand gegenüberstehende Seitenplatten (7, 8) aufweist,

in jeder der beiden Seitenplatten (7, 8) mindestens eine Nut oder Rille (11) vorgesehen ist, wobei jede mindestens eine Nut oder Rille (11) in der einen Seitenplatte (7) der anderen mindestens einen Nut oder Rille in der anderen Seitenplatte (8) gegenübersteht, so daß ein Nuten- oder Rillenpaar gebildet ist, und

der mindestens eine Behälterhalter (5) herausnehmbar von den Seitenplatten (7, 8) gehalten ist, indem er verschiebbar in das Nuten- oder Rillenpaar (11) eingeführt ist.

2. Vorrichtung nach Anspruch 1, dadurch gekennzeichnet, daß mindestens drei Paar von Nuten oder Rillen (11) und mindestens zwei Behälterhalter (5) vorgesehen sind, wobei durch Umsetzen der Behälterhalter (5) in unterschiedliche Nuten- oder Rillenpaare (11) Behälter verschiedener Länge aufnehmbar sind.

3. Vorrichtung nach Anspruch 1 oder 2, gekennzeichnet durch

eine Einrichtung zum wiederholten Umdrehen des Trägers (6) so daß ein vom Behälterhalter (5) gehaltener Behälter (a) wiederholt umgedreht wird, und

eine Einrichtung zum Ändern der Temperatur der Behälter (a), während diese durch die Umdreheinrichtung wiederholt umgedreht werden.

4. Vorrichtung nach Anspruch 3, dadurch gekennzeichnet, daß die Einrichtung zum Ändern der Temperatur der Behälter (a) Mittel zum Aufsprühen eines Strömungsmittels auf die Behälter aufweist.

## Revendications

1. Un appareil pour manipuler et traiter des récipients de diverses tailles comportant

un support (6) pour transporter des récipients (a, b); et

au moins un porte-récipient (5) agencé pour retenir à l'unité les récipients (a, b) de diverses tailles,

ledit porte-récipient (5) étant transporté à travers au moins un dispositif sélectionné dans le groupe constitué par des dispositifs comportant des moyens pour emballer déballer, nettoyer, remplir, coiffer, fermer et stériliser les récipients retenus par ledit porte-récipient (5), caractérisé en ce que

ledit support (6) comporte une paire de plaques latérales (7, 8) espacées et en regard,

au moins une gorge (11) est prévue dans chacune desdites deux plaques latérales (7, 8), chaque gorge (11) d'une plaque latérale (7) étant en regard de l'autre gorge de ladite autre plaque latérale (8) pour constituer une paire de gorges; et

ledit porte-récipient (5) est retenu de manière séparable par lesdites plaques latérales (7, 8) qui sont reçues à coulissement dans ladite paire de gorges (11).

2. L'appareil de la revendication 1, dans lequel il existe au moins trois paires de gorges (11) et au moins deux porte—récipients (5), de manière que le déplacement desdits porte-récipients (5) pour les faire coopérer avec différentes paires desdites paires de gorges (11) permet l'adaptation à des récipients de diverses longueurs.

3. L'appareil de la revendication 1 ou 2, caractérisé en ce qu'il comporte en outre:

des moyens pour tourner ledit support (6), un récipient (a) retenu par ledit porte-récipient (5) pouvant ainsi être tourné de manière répétée et

des moyens pour modifier la température des récipients (a) lorsque les récipients sont tournés de manière répétée par lesdits moyens de rotation.

4. L'appareil de la revendication 3, dans lequel les moyens pour modifier la température des récipients (a) comportent des moyens pour pulvériser du fluide sur les récipients.

8

EP 0 291 674 B1

FIG.1

FIG.2

FIG.3

FIG.5

FIG.4

FIG.6

FIG. 7

C

D

syrup filling

filled with gas, water

closure mounting

capping

invert

13

14

15

16

6

6

6

B rinsing

6

12

6

invert

6

6

6

6

6

18

6

removal of bottle pieces

recovery of carrier

unloading

sterilizing E

6

bottle loading

cleaning of carrier

G

6

H

a

A

F

EP 0 291 674 B1

2

# FIG.8

# FIG .9

# FIG .10

(I)  (II)  (III)  (IV)  (V)

# FIG . 11

# FIG. 12